# EUROPEAN PATENT APPLICATION

(11) **EP 4 576 400 A1**
(43) Date of publication of application: **25.06.2025**
(21) Application number: 24819530.7
(22) Date of filing: 29.05.2024
(51) Int. Cl.: H01M 50/516, H01M 50/276, H01M 50/211, H01M 50/503, H01M 50/524

(54) **BATTERY CELL ASSEMBLY**

(30) Priority: 07.06.2023 KR 20230072952
(71) Applicant: LG Energy Solution, Ltd., Seoul 07335 (KR)
(72) Inventor: JANG, Byung Do, Daejeon 34122 (KR)
(74) Representative: Hoffmann Eitle
(86) International application number: PCT/KR2024/007283
(87) International publication number: WO 2024/253378

(57) **Abstract**

Provided is a battery cell assembly according to example embodiments. The battery cell assembly includes a cell stack including a plurality of pouch type battery cells, and a top plate assembly on the cell stack, in which the top plate assembly includes a top plate, a bus bar frame coupled to the top plate, and a plurality of bus bars on the bus bar frame, and each of the bus bar frames includes a material different from a material of the top plate.

## Description

### [Technical Field]

The present invention relates to a battery cell assembly. The present application claims the benefit of priority based on Korean Patent Application No. 10-2023-0072952, filed on June 7, 2023, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

Cell manufacturers are paying huge capital expenditures to meet the growth of steep demand for secondary batteries for mobility. Companies are increasing productivity per line to maximize the return on invested capital, and to this end, various researches are continuously being conducted to improve yield and productivity.

### [Disclosure]

### [Technical Problem]

The present invention is directed to providing a battery cell assembly with improved productivity.

### [Technical Solution]

Example embodiments of the present invention provide a battery cell assembly. The battery cell assembly includes a cell stack including a plurality of pouch type battery cells, and a top plate assembly on the cell stack, in which the top plate assembly includes a top plate covering the cell stack, a bus bar frame coupled to the top plate, and a plurality of bus bars on the bus bar frame, and each of the bus bar frames includes a material different from a material of the top plate.

The top plate may include a conductive material.

The bus bar frame may include an insulating material.

The bus bar frame may be thermally fused to the top plate.

The top plate may include a plurality of fastening holes horizontally surrounding the plurality of bus bars.

The bus bar frame may include a plurality of flanges overlapping the plurality of fastening holes.

The bus bar frame may include a plurality of rods passing through the plurality of fastening holes and connected to the plurality of flanges.

A width of each of the plurality of flanges may be greater than a width of each of the plurality of fastening holes.

The battery cell assembly may further include a lower frame welded to the top plate.

The lower frame includes a bottom part spaced apart from the top plate with the cell stack interposed therebetween, and side walls welded to the top plate.

The battery cell assembly may further include end plates welded to the top plate and having a flat plate shape.

The plurality of bus bars may include a part between the top plate and positive electrode leads and negative electrode leads of the plurality of pouch type battery cells.

Example embodiments provide a battery cell assembly. The battery cell assembly includes: a lower frame having a U-shape; a cell stack placed on the lower frame and including a plurality of first pouch type battery cells and a plurality of second pouch type battery cells, wherein each of the plurality of first pouch type battery cells includes a first lower side facing the lower frame and a first upper side opposite to the first lower side, wherein a first positive electrode lead and a first negative electrode lead of each of the plurality of first pouch type battery cells are on the first upper side and spaced apart from each other in a first direction, and each of the plurality of second pouch type battery cells includes a second lower side facing the lower frame and a second upper side opposite to the second lower side, wherein a second positive electrode lead and a second negative electrode lead of each of the plurality of second pouch type battery cells are on the second upper side and spaced apart from each other in the first direction; and a top plate assembly on the cell stack. The top plate assembly includes a top plate covering the cell stack, a first bus bar frame coupled to the top plate by thermal fusion and including a plurality of first slits, and a second bus bar frame coupled to the top plate by thermal fusion, spaced apart from the first bus bar frame in the first direction, and including a plurality of second slits. The first positive electrode lead of each of the plurality of first pouch type battery cells and the second negative electrode lead of each of the plurality of second pouch type battery cells pass through a corresponding one of the plurality of first slits. The first negative electrode lead of each of the plurality of first pouch type battery cells and the second positve electrode lead of each of the plurality of second pouch type battery cells pass through a corresponding one of the plurality of second slits.

The top plate may be welded to the lower frame.

First and second sides of the top plate that are parallel to the first direction may be welded to the lower frame.

The top plate may include a metal, and the first and second bus bar frames may include plastic.

### [Advantageous Effects]

A top plate assembly of a battery cell assembly according to example embodiments of the present disclosure includes a top plate and bus bar frames that are coupled to each other by a method such as thermal fusion or bolting. Accordingly, a process of assembling the bus bar frames can be omitted, thus improving the productivity of the battery cell assembly.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a battery cell assembly according to example embodiments.
FIG. 2 is an exploded perspective view of a battery cell assembly.
FIG. 3 is a perspective view for describing a top plate assembly according to example embodiments.
FIG. 4 is a plan view of a cell stack.
FIG. 5 is a side view of a pouch type battery cell.
FIG. 6 is a partial plan view of the battery cell assembly of FIG. 1.
FIG. 7 is a partial plan view of the battery cell assembly of FIG. 1.
FIG. 8 illustrates bus bars.
FIG. 9 illustrates an interbus bar.
FIG. 10 illustrates an interbus bar.
FIG. 11 is a perspective view of a battery cell assembly according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

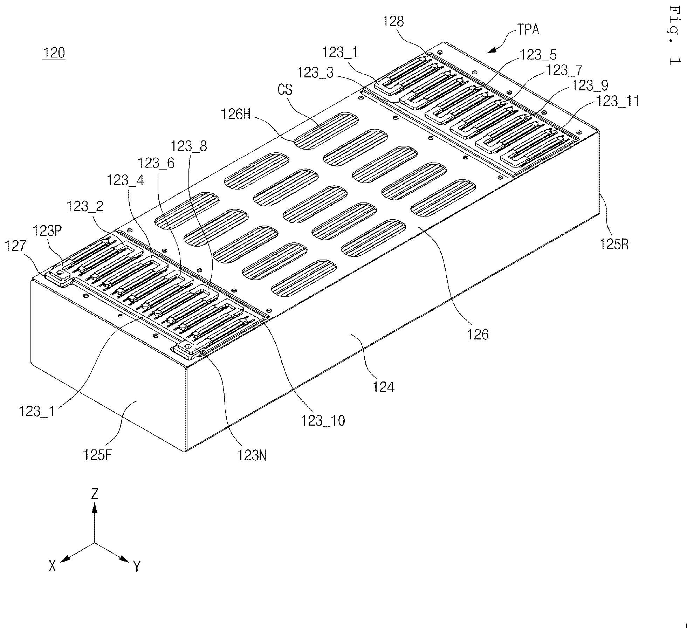

FIG. 1 is a perspective view of a battery cell assembly 120 according to example embodiments.

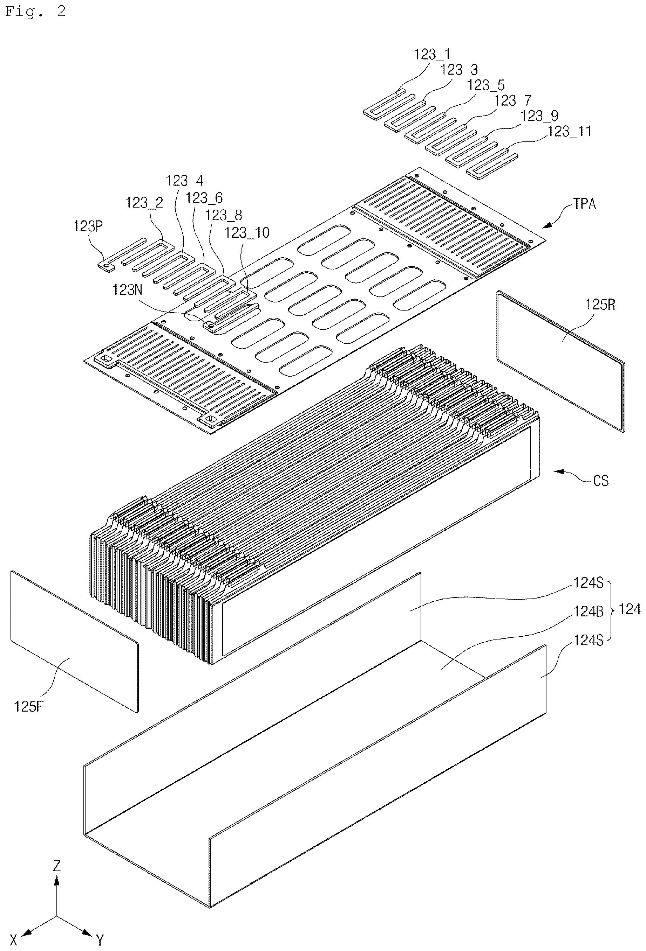

FIG. 2 is an exploded perspective view of the battery cell assembly 120.

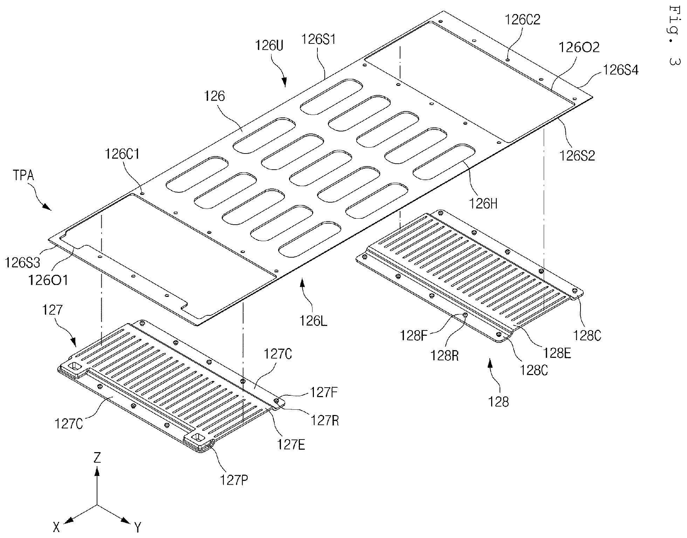

FIG. 3 is a perspective view for describing a top plate assembly TPA according to example embodiments.

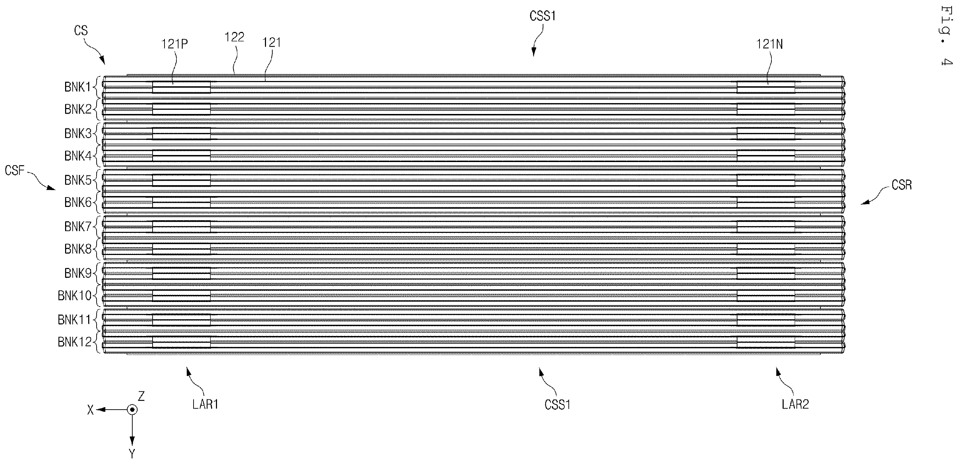

FIG. 4 is a plan view of a cell stack CS.

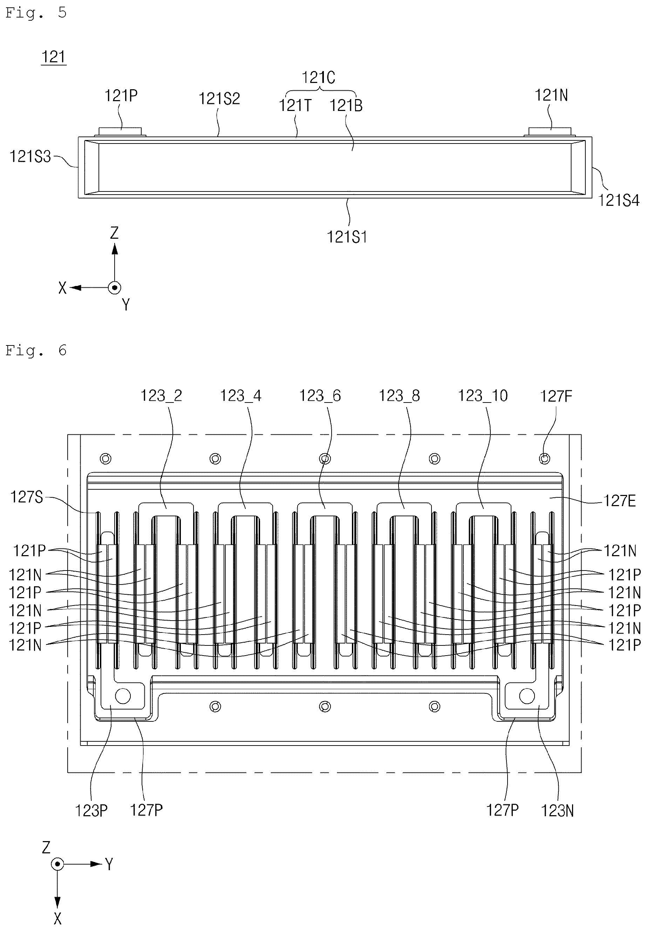

FIG. 5 is a side view of a pouch type battery cell 121.

Referring to FIGS. 1 to 5, the battery cell assembly 120 may include the cell stack CS, first and second interbus bars 123P and 123N, a plurality of bus bars 123_1, 123_2, 123_3, 123_4, 123_5, 123_6, 123_7, 123_8, 123_9, 123_10, and 123_11 (hereinafter, 123_1 to 123_1 1), a lower frame 124, end plates 125F and 125R, and the top plate assembly TPA.

According to example embodiments, the cell stack CS may include a plurality of banks BNK1, BNK2, BNK3, BNK4, BNK5, BNK6, BNK7, BNK8, BNK9, BNK10, BNK11, and BNK12 (hereinafter, BNK1 to BNK12). Each of the plurality of banks BNK1 to BNK12 may include a plurality of pouch type battery cells 121. The plurality of pouch type battery cells 121 of each of the plurality of banks BNK1 to BNK12 may be connected to each other in parallel. The plurality of banks BNK1 to BNK12 may be connected to each other in series.

FIG. 4 illustrates, for example, the battery cell assembly 120 with twelve banks BNK1 to BNK12 each including two pouch type battery cells 121, and the technical idea of the present invention is not limited thereto in any sense. The number of pouch type battery cells 121 of the banks BNK1 to BNK12 and the number of the banks BNK1 to BNK12 connected to each other in series may be changed according to a voltage and a current to be output through the battery cell assembly 120.

Each of the pouch type battery cells 121 may include an electrode assembly, an electrolyte, and a pouch case 121C. The electrode assembly included in the pouch case 121C may include a positive electrode, a negative electrode, and a separator between the positive electrode and the negative electrode. The electrode assembly may be a jelly-roll type electrode assembly or a stack type electrode assembly according to a form of assembly. The jelly-roll type electrode assembly may include a structure in which a positive electrode, a negative electrode, and a separator interposed therebetween are wound together. The stack type electrode assembly may include a plurality of positive electrodes, a plurality of negative electrodes, and a plurality of separators interposed therebetween that are stacked sequentially.

The positive electrodes of the electrode assembly may be connected to a positive electrode lead 121P. The negative electrodes of the electrode assembly may be connected to a negative electrode lead 121N. The positive electrode lead 121P and the negative electrode lead 121N may protrude from the pouch case 121C to the outside. The positive electrode lead 121P and the negative electrode lead 121N may be spaced apart from each other in an X-axis direction.

The pouch case 121C may include a storage part 121B and a terrace 121T. The storage part 121B may provide a storage space for storing the electrode assembly. The storage space may be provided by a forming process. The storage part 121B may have a convex shape with respect to the terrace 121T. The terrace 121T may include a sealed portion. The terrace 121T may surround the storage part 121B.

The pouch case 121C of each of the plurality of pouch type battery cells 121 may include first to fourth sides 121S1, 121S2, 121S3, and 121S4. The first side 121S1 of the pouch case 121C may face a bottom part 124B of the lower frame 124. The second side 121S2 of the pouch case 121C may be opposite to the first side 121S1 of each of the plurality of pouch type battery cells 121. The third and fourth sides 121S3 and 121S4 of the pouch case 121C may be connected to the first and second sides 121S1 and 121S2 of the pouch case 121C, respectively.

According to example embodiments, each of the plurality of pouch type battery cells 121 may be a unidirectional cell. According to example embodiments, the positive electrode lead 121P and the negative electrode lead 121N of each of the plurality of pouch type battery cells 121 may be disposed in the same direction. According to example embodiments, the positive electrode lead 121P and the negative electrode lead 121N of each of the plurality of pouch type battery cells 121 may be on the second side 121S2 of the pouch case 121C of each of the plurality of pouch type battery cells 121. The positive electrode lead 121P and the negative electrode lead 121N may protrude from the second side 121S2 of the pouch case 121C. The positive electrode lead 121P and the negative electrode lead 121N of each of the plurality of pouch type battery cells 121 may be adjacent to opposite ends of each of the plurality of pouch type battery cells 121 in the X-axis direction. The positive electrode lead 121P may be adjacent to the third side 121S3, and the negative electrode lead 121N may be adjacent to the fourth side 121S4.

According to example embodiments, the plurality of pouch type battery cells 121 may be arranged in a Y-axis direction. A Y-axis direction may be substantially perpendicular to the X-axis direction. The positive electrode leads 121P and the negative electrode leads 121N of each of the plurality of pouch type battery cells 121 may be aligned in the Y-axis direction. The positive electrode leads 121P and the negative electrode leads 121N of the plurality of pouch type battery cells 121 may form first and second lead arrays LAR1 and LAR2.

According to example embodiments, the positive electrode leads 121P of each of the odd-numbered banks BNK1, BNK3, BNK5, BNK7, BNK9, and BNK11 may be included in the first lead array LAR1. According to example embodiments, the negative electrode leads 121N of each of the odd-numbered banks BNK1, BNK3, BNK5, BNK7, BNK9, and BNK11 may be included in the second lead array LAR2.

According to example embodiments, the positive electrode leads 121P of each of the even-numbered banks BNK2, BNK4, BNK6, BNK8, BNK10, and BNK12 may be included in the second lead array LAR2. According to example embodiments, the negative electrode leads 121N of each of the even-numbered banks BNK2, BNK4, BNK6, BNK8, BNK10, and BNK12 may be included in the first lead array LAR1.

In other words, the first lead array LAR1 may include the positive electrode lead 121P of each of the pouch type battery cells 121 of each of the odd-numbered banks BNK1, BNK3, BNK5, BNK7, BNK9, and BNK11, and the negative electrode lead 121N of each of the pouch type battery cells 121 of each of the even-numbered banks BNK2, BNK4, BNK6, BNK8, BNK10, and BNK12.

The second lead array LAR2 may include the negative electrode lead 121N of each of the pouch type battery cells 121 of each of the odd-numbered banks BNK1, BNK3, BNK5, BNK7, BNK9, and BNK11, and the positive electrode lead 121P of each of the pouch type battery cells 121 of each of the even-numbered banks BNK2, BNK4, BNK6, BNK8, BNK10, and BNK12.

Each of the pouch type battery cells 121 of the odd-numbered banks BNK1, BNK3, BNK5, BNK7, BNK9, and BNK11 may be referred to as a first pouch type battery cell. The pouch case 121C, the positive electrode lead 121P, and the negative electrode lead 121N of each of the pouch type battery cells 121 of the odd-numbered banks BNK1, BNK3, BNK5, BNK7, BNK9, and BNK11 may be referred to as a first pouch case, a first positive electrode lead, and a first negative electrode lead, respectively.

Each of the pouch type battery cells 121 of the even-numbered banks BNK2, BNK4, BNK6, BNK8, BNK10, and BNK12 may be referred to as a second pouch type battery cell. The pouch case 121C, the positive electrode lead 121P, and the negative electrode lead 121N of each of the pouch type battery cells 121 of the even-numbered banks BNK2, BNK4, BNK6, BNK8, BNK10, and BNK12 may be referred to as a second pouch case, a second positive electrode lead, and a second negative electrode lead, respectively.

The positive electrode leads 121P of each of the plurality of banks BNK1 to BNK12 may be short-circuited with each other. The negative electrode leads 121N of each of the plurality of banks BNK1 to BNK12 may be short-circuited with each other.

The negative electrode leads 121N of each of the plurality of banks BNK1 to BNK12 may be short-circuited with positive electrode leads 121P of a following bank among the plurality of banks BNK1 to BNK12.

For example, the negative electrode leads 121N of the pouch type battery cells 121 of the bank BNK1 may be short-circuited with the positive electrode leads 121P of the pouch type battery cells 121 of the bank BNK2 by the bus bar 123_1, the negative electrode leads 121N of the pouch type battery cells 121 of the bank BNK2 may be short-circuited with the positive electrode leads 121P of the pouch type battery cells 121 of the bank BNK3 by the bus bar 123_2, the negative electrode leads 121N of the pouch type battery cells 121 of the bank BNK3 may be short-circuited with the positive electrode leads 121P of the pouch type battery cells 121 of the bank BNK4 by the bus bar 123_3, the negative electrode leads 121N of the pouch type battery cells 121 of the bank BNK4 may be short-circuited with the positive electrode leads 121P of the pouch type battery cells 121 of the bank BNK5 by the bus bar 123_4, the negative electrode leads 121N of the pouch type battery cells 121 of the bank BNK5 may be short-circuited with the positive electrode leads 121P of the pouch type battery cells 121 of the bank BNK6 by the bus bar 123_5, the negative electrode leads 121N of the pouch type battery cells 121 of the bank BNK6 may be short-circuited with the positive electrode leads 121P of the pouch type battery cells 121 of the bank BNK7 by the bus bar 123_6, the negative electrode leads 121N of the pouch type battery cells 121 of the bank BNK7 may be short-circuited with the positive electrode leads 121P of the pouch type battery cells 121 of the bank BNK8 by the bus bar 123_7, the negative electrode leads 121N of the pouch type battery cells 121 of the bank BNK8 may be short-circuited with the positive electrode leads 121P of the pouch type battery cells 121 of the bank BNK9 by the bus bar 123_8, the negative electrode leads 121N of the pouch type battery cells 121 of the bank BNK9 may be short-circuited with the positive electrode leads 121P of the pouch type battery cells 121 of the bank BNK10 by the bus bar 123_9, the negative electrode leads 121N of the pouch type battery cells 121 of the bank BNK10 may be short-circuited with the positive electrode leads 121P of the pouch type battery cells 121 of the bank BNK11 by the bus bar 123_10, and the negative electrode leads 121N of the pouch type battery cells 121 of the bank BNK11 may be short-circuited with the positive electrode leads 121P of the pouch type battery cells 121 of the bank BNK12 by the bus bar 123_11. Accordingly, the plurality of banks BNK1 to BNK12 may be sequentially connected in series. The plurality of banks BNK1 to BNK12 may be connected in series by the plurality of bus bars 123_1 to 123_11 as described below.

According to example embodiments, the cell stack CS may further include a plurality of separators 122 between the plurality of pouch type battery cells 121. The plurality of separators 122 may horizontally support the plurality of pouch type battery cells 121 to prevent swelling of the plurality of pouch type battery cells 121. According to example embodiments, the plurality of separators 122 may be thermal barriers. According to example embodiments, each of the plurality of separators 122 may have a high melting temperature and a low thermal conductivity. According to example embodiments, each of the plurality of separators 122 may include a flame retardant material such as ceramic and coated glass fiber. According to example embodiments, each of the plurality of separators 122 may be configured to emit a fire retarding material and a fire extinguishing agent when a thermal runaway event occurs.

The lower frame 124, the end plates 125F and 125R, and the top plate assembly TPA may be coupled to one another. Each of the lower frame 124, the end plates 125F and 125R, and a top plate 126 of the top plate assembly TPA may include, for example, a metal material such as aluminum. The lower frame 124, the end plates 125F and 125R, and the top plate 126 may be welded to one another. Accordingly, the lower frame 124, the end plates 125F and 125R, and the top plate 126 may be fixed to one another, and form an outer case of the battery cell assembly 120. According to example embodiments, the lower frame 124, the end plates 125F and 125R, and the top plate 126 may protect the cell stack CS.

The lower frame 124 may have a roughly U shape. The lower frame 124 may include a bottom part 124B and side walls 124S connected to the bottom part 124B. The side walls 124S may be at opposite ends (e.g., opposite ends in the Y-axis direction) of the bottom part 124B. The side walls 124S may be substantially perpendicular to the bottom part 124B.

The top plate assembly TPA may include the top plate 126 and bus bar frames 127 and 128. The bus bar frames 127 and 128 may be coupled to the top plate 126.

A first side 126S1 and a second side 126S2 of the top plate 126 may be in contact with side walls of the lower frame 124. The first side 126S1 and the second side 126S2 of the top plate 126 may be welded to the side walls of the lower frame 124. * The first side 126S1 and the second side 126S2 of the top plate 126 may be substantially parallel to the X-axis direction.

Each of the end plates 125F and 125R may have a roughly flat plate shape. The end plate 125F may cover a front surface of the cell stack CS, and the end plate 125R may cover a rear surface of the cell stack CS. The front and rear surfaces of the cell stack CS are opposite to each other. The front surface of the cell stack CS may be adjacent to the first lead array LAR1, and the rear surface of the cell stack CS may be adjacent to the second lead array LAR2.

The end plate 125F may be in contact with a third side 126S3 of the top plate 126. The end plate 125F may be welded to the third side 126S3 of the top plate 126. The end plate 125R may be in contact with a fourth side 126S4 of the top plate 126. The end plate 125R may be welded to the fourth side 126S4 of the top plate 126.

The top plate 126 may include openings 12601 and 12602 and exhaust holes 126H. The exhaust holes 126H may provide a path for exhausting a high-temperature gas when a thermal runaway event occurs in the plurality of pouch type battery cells 121. The exhaust holes 126H may be between the openings 12601 and 12602.

The openings 12601 and 12602 may be spaced apart from each other with the exhaust holes 126H interposed therebetween. The openings 12601 and 12602 may be spaces for coupling the bus bar frames 127 and 128. The bus bar frame 127 may be inserted into the top plate 126 through the opening 12601, and the bus bar frame 128 may be inserted into the top plate 126 through the opening 12602.

The bus bar frame 127 may include coupling parts 127C and an elevated part 127E. The coupling parts 127C may be spaced apart from each other with the elevated part 127E interposed therebetween. The bus bar frame 127 may be inserted upwardly into the top plate 126. That is, the bus bar frame 127 may be inserted into the opening 12601 of the top plate 126 in a direction from a lower surface 126L of the top plate 126 toward an upper surface 126U of the top plate 126.

Accordingly, the coupling parts 127C of the bus bar frame 127 may be in contact with the lower surface 126L of the top plate 126, and the elevated part 127E of the bus bar frame 127 may pass through the opening 12601.

The elevated part 127E of the bus bar frame 127 and the opening 12601 may have complementary shapes. The elevated part 127E of the bus bar frame 127 may have a shape of a roughly tetragonal plane and include protrusions 127P protruding from corners of the tetragonal plane. The protrusions 127P may support the interbus bars 123P and 123N. The opening 12601 may include a roughly tetragonal portion and portions protruding from corners of the tetragonal portion.

The elevated part 127E of the bus bar frame 127 may be at a higher level than the upper surface 126U of the top plate 126. That is, a distance between the elevated part 127E of the bus bar frame 127 and the lower surface 126L of the top plate 126 may be greater than a distance between the upper surface 126U of the top plate 126 and the lower surface 126L of the top plate 126. Accordingly, a short circuit between the bus bars 123_2, 123_4, 123_6, 123_8, and 123_10 on the bus bar frame 127 and the interbus bars 123P and 123N and the top plate 126 may be prevented. According to example embodiments, a thickness (i.e., a length in the Z-axis direction) of the bus bar frame 127 may be different from a thickness (i.e., a length in the Z-axis direction) of the top plate 126. According to example embodiments, the thickness (i.e., the length in the Z-axis direction) of the bus bar frame 127 may be greater than the thickness (i.e., the length in the Z-axis direction) of the top plate 126.

The bus bar frame 127 may include a plurality of flanges 127F on the coupling parts 127C. There may be a plurality of rods 127R between the plurality of flanges 127F and the coupling parts 127C. A width (or diameter) of each of the plurality of flanges 127F may be different from a width (or diameter) of each of the plurality of rods 127R. The width (or diameter) of each of the plurality of flanges 127F may be greater than the width (or diameter) of each of the plurality of rods 127R.

The top plate 126 may include a plurality of coupling holes 126C1 surrounding the opening 12601. The plurality of coupling holes 126C1 may be arranged along the circumference of the opening 12601 of the top plate 126. The plurality of coupling holes 126C1 may overlap the plurality of flanges 127F in, for example, the Z-axis direction. The plurality of coupling holes 126C1 may be penetrated by the plurality of rods 127R. The width (or diameter) of the plurality of coupling holes 126C1 may be different from a width (or diameter) of each of the plurality of flanges 127F. The width (or diameter) of the plurality of coupling holes 126C1 may be less than the width (or diameter) of each of the plurality of flanges 127F. The plurality of flanges 127F may be spaced apart from the coupling part 127C with the top plate 126 interposed therebetween. Accordingly, the bus bar frame 127 may be fixed onto the top plate 126. The plurality of flanges 127F may be formed by, for example, deformation by melting.

The bus bar frame 127 may be thermally fused to the top plate 126. According to example embodiments, the mechanical robustness of the bus bar frame 127 and the top plate 126 may be improved by thermally fusing the bus bar frame 127 and the top plate 126 and forming the plurality of flanges 127F, thereby improving the reliability of the battery cell assembly 120.

The bus bar frame 128 may include coupling parts 128C and an elevated part 128E. The coupling parts 128C may be spaced apart from each other with the elevated part 128E interposed therebetween. The bus bar frame 128 may be inserted upwardly into the top plate 126. That is, the bus bar frame 128 may be inserted into the opening 12602 of the top plate 126 in the direction from the lower surface 126L of the top plate 126 toward the upper surface 126U of the top plate 126. The bus bar frame 128 may be spaced apart from the bus bar frame 127 in the X-axis direction. The bus bar frame 128 may be spaced apart from the bus bar frame 127 with the plurality of exhaust holes 126H interposed therebetween.

Accordingly, the coupling parts 128C of the bus bar frame 128 may be in contact with the lower surface 126L of the top plate 126, and the elevated part 128E of the bus bar frame 128 may pass through the opening 12602.

The elevated part 128E of the bus bar frame 128 and the opening 12602 may have complementary shapes. The elevated part 128E of the bus bar frame 128 may include a roughly tetragonal planar shape. The opening 12602 may have a roughly tetragonal shape.

The elevated part 128E of the bus bar frame 128 may be at a higher level than the upper surface 126U of the top plate 126. That is, a distance between the elevated part 128E of the bus bar frame 128 and the lower surface 126L of the top plate 126 may be greater than the distance between the upper surface 126U of the top plate 126 and the lower surface 126L of the top plate 126. Accordingly, a short circuit between the bus bars 123_1, 123_3, 123_5, 123_7, 123_9, and 123_11 on the bus bar frame 128 and the interbus bars 123P and 123N and the top plate 126 may be prevented. According to example embodiments, a thickness (i.e., a length in the Z-axis direction) of the bus bar frame 128 may be different from the thickness (i.e., the length in the Z-axis direction) of the top plate 126. According to example embodiments, the thickness (i.e., the length in the Z-axis direction) of the bus bar frame 128 may be greater than the thickness (i.e., the length in the Z-axis direction) of the top plate 126.

The bus bar frame 128 may include a plurality of flanges 128F on the coupling parts 128C. There may be a plurality of rods 128R between the plurality of flanges 128F and the coupling parts 128C. A width (or diameter) of each of the plurality of flanges 128F may be different from a width (or diameter) of each of the plurality of rods 128R. The width (or diameter) of each of the plurality of flanges 128F may be greater than the width (or diameter) of each of the plurality of rods 128R.

The top plate 126 may include a plurality of coupling holes 126C2 surrounding the opening 12602. The plurality of coupling holes 126C2 may be arranged along the circumference of the opening 12602 of the top plate 126. The plurality of coupling holes 126C2 may be penetrated by the plurality of rods 128R. The width (or diameter) of the plurality of coupling holes 126C2 may be different from a width (or diameter) of each of the plurality of flanges 128F. The width (or diameter) of the plurality of coupling holes 126C2 may be less than the width (or diameter) of each of the plurality of flanges 128F. The plurality of flanges 128F may be spaced apart from the coupling part 128C with the top plate 126 interposed therebetween. Accordingly, the bus bar frame 128 may be fixed onto the top plate 126. The plurality of flanges 1278F may be formed by, for example, deformation by melting.

The bus bar frame 128 may be thermally fused to the top plate 126. According to example embodiments, the mechanical robustness of the bus bar frame 128 and the top plate 126 may be improved by thermally fusing the bus bar frame 128 and the top plate 126 and forming the plurality of flanges 128F, thereby improving the reliability of the battery cell assembly 120.

FIG. 6 is a partial plan view of the battery cell assembly 120 of FIG. 1.

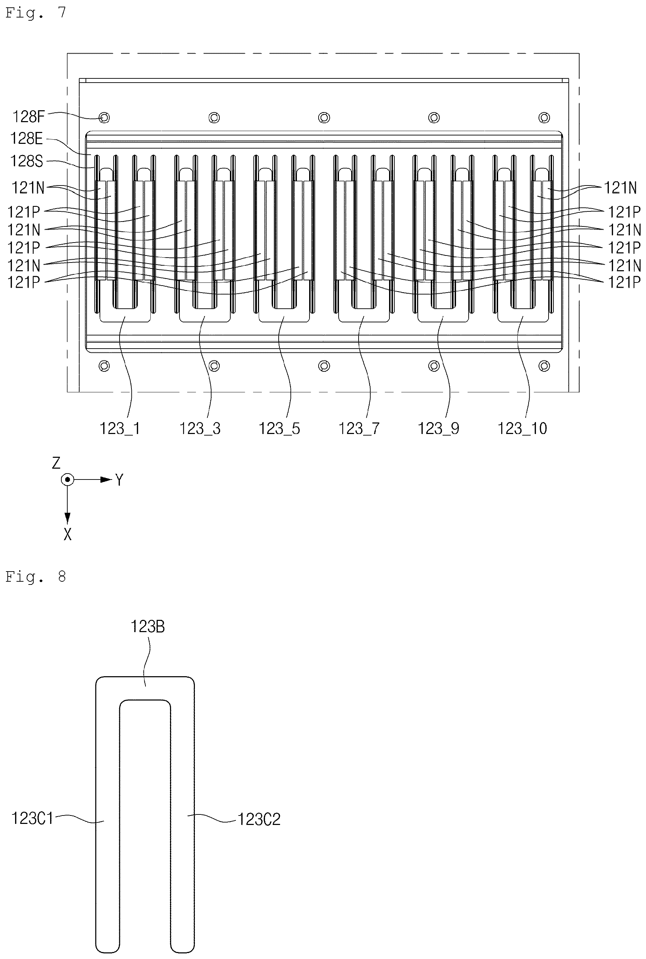

FIG. 7 is a partial plan view of the battery cell assembly 120 of FIG. 1.

FIG. 8 illustrates the bus bars 123_1 to 123_11.

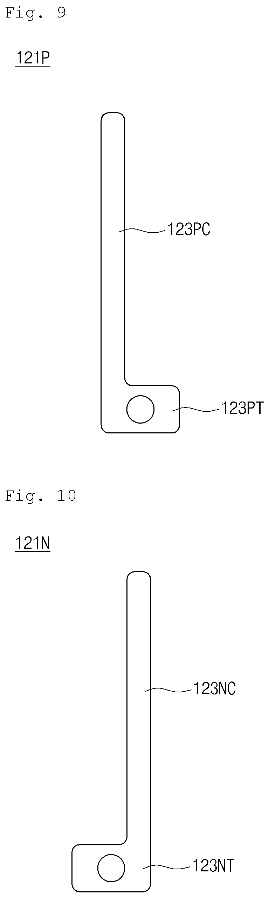

FIG. 9 illustrates the interbus bar 123P.

FIG. 10 illustrates the interbus bar 123N.

Referring to FIGS. 4 and 6 to 10, the interbus bars 123P and 123N and the bus bars 123_2, 123_4, 123_6, 123_8, and 123_10 may be mounted on the bus bar frame 127, and the bus bars 123_1, 123_3, 123_5, 123_7, 123_9, and 123_11 may be mounted on the bus bar frame 128. The bus bar frame 127 may include slits 127S, and the bus bar frame 128 may include slits 128S. The positive electrode leads 121P and the negative electrode leads 121N may be coupled to the bus bars 123_1 to 123_11 and the interbus bars 123P and 123N through one of the slits 127S and the slits 128S.

Each of the bus bars 123_1 to 123_11 may include coupling parts 123C1 and 123C2 and a bridge 123B. Each of the coupling parts 123C1 and 123C2 may have a rod shape. The bridge 123B may have a rod shape and be connected to the coupling parts 123C1 and 123C2. Accordingly, a planar shape of each of the bus bars 123_1 to 123_11 may include a roughly U-shape.

The coupling parts 123C1 and 123C2 may be in contact with one of the positive electrode leads 121P and the negative electrode leads 121N. The coupling parts 123C1 and 123C2 may be coupled to one of the positive electrode leads 121P and the negative electrode leads 121N by welding or like.

For example, as shown in FIG. 6, the negative electrode leads 121N of the second bank BNK2 passing through the slits 127S of the bus bar frame 127 may be coupled to the coupling part 123C1 of the bus bar 123_2. The negative electrode leads 121N of the second bank BNK2 may be welded to the coupling part 123C1 of the bus bar 123_2. The negative electrode leads 121N of the second bank BNK2 may be spaced apart from each other but embodiments are not limited thereto. The positive electrode leads 121P of the third bank BNK3 passing through the slits 127S may be coupled to the coupling part 123C2 of the bus bar 123_2. The positive electrode leads 121P of the third bank BNK3 may be welded to the coupling part 123C2 of the bus bar 123_2. The positive electrode leads 121P of the third bank BNK3 may be spaced apart from each other but embodiments are not limited thereto. Accordingly, the negative electrode leads 121N of the second bank BNK2 may be short-circuited with the positive electrode leads 121P of the third bank BNK3.

As another example, as shown in FIG. 7, the negative electrode leads 121N of the first bank BNK1 passing through the slits 128S may be coupled to the coupling part 123C1 of the bus bar 123_1. The negative electrode leads 121N of the first bank BNK1 may be welded to the coupling part 123C1 of the bus bar 123_1. The negative electrode leads 121N of the first bank BNK1 may be spaced apart from each other but embodiments are not limited thereto. The positive electrode leads 121P of the second bank BNK2 passing through the slits 128S may be coupled to the coupling part 123C2 of the bus bar 123_1. The positive electrode leads 121P of the second bank BNK2 may be welded to the coupling part 123C2 of the bus bar 123_1. The positive electrode leads 121P of the second bank BNK2 may be spaced apart from each other but embodiments are not limited thereto. Accordingly, the negative electrode leads 121N of the first bank BNK1 may be short-circuited with the positive electrode leads 121P of the second bank BNK2.

The coupling between the bus bars 123_3, 123_4, 123_5, 123_6, 123_7, 123_8, 123_9, 123_10, and 123_11, the positive electrode leads 121P, and the negative electrode leads 121N is substantially the same as those described above with respect to the bus bars 123_1 and 123_2 and thus a redundant description thereof is omitted here.

The interbus bar 123P may include a coupling part 123PC and a contact part 123PT. The coupling part 123PC may be in contact with the positive electrode leads 121P of the bank BNK1 passing through the slits 127S. The coupling part 123PC may be coupled to the positive electrode leads 121P of the bank BNK1 passing through the slits 127S by welding or the like. The positive electrode leads 121P of the bank BNK1 may surround the coupling part 123PC. Accordingly, the interbus bar 123P (more specifically, the coupling part 123PC of the interbus bar 123P) may include a part between the positive electrode leads 121P and the bus bar frame 127.

The interbus bar 123N may include a coupling part 123NC and a contact part 123NT. The coupling part 123NC may be in contact with the negative electrode leads 121N of the bank BNK12 passing through the slits 127S. The coupling part 123NC may be coupled to the negative electrode leads 121N of the bank BNK12 passing through the slits 127S by welding or the like. The negative electrode leads 121N of the bank BNK12 may cover the coupling part 123NC. Accordingly, the interbus bar 123N (more specifically, the coupling part 123NC of the interbus bar 123N) may include a part between the negative electrode leads 121N and the bus bar frame 127.

The contact part 123PT may be a contact pad for providing a series connection between a plurality of battery cell assemblies 120 when the plurality of battery cell assemblies 120 are mounted in a housing of a battery pack to assemble the battery pack.

The contact part 123PT may be a contact pad for providing a series connection between a plurality of battery cell assemblies 120 when the plurality of battery cell assemblies 120 are mounted in a housing of a battery pack to assemble the battery pack.

### (Second Embodiment)

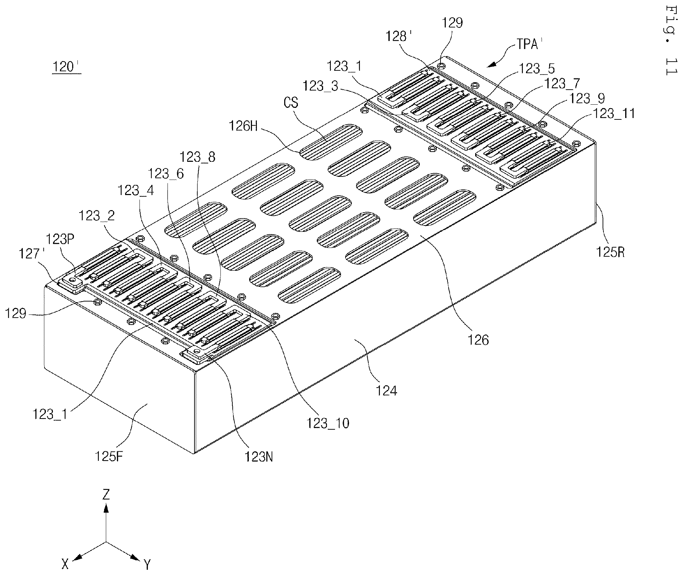

FIG. 11 is a perspective view of a battery cell assembly 120' according to example embodiments.

Referring to FIGS. 1 to 5, the battery cell assembly 120' may include a cell stack CS, first and second interbus bars 123P and 123N, a plurality of bus bars 123_1, 123_2, 123_3, 123_4, 123_5, 123_6, 123_7, 123_8, 123_9, 123_10, and 123_11 (hereinafter, 123_1 to 123_1 1), a lower frame 124, end plates 125F and 125R, a top plate assembly TPA', and fasteners 129. The top plate assembly TPA' may include a top plate 126 and bus bar frames 127' and 128'.

The cell stack CS, the first and second interbus bars 123P and 123N, the plurality of bus bars 123_1, 123_2, 123_3, 123_4, 123_5, 123_6, 123_7, 123_8, 123_9, 123_10, and 123_11 (hereinafter, 123_1 to 123_11), the lower frame 124, the end plates 125F and 125R, and the top plate 126 are substantially the same as those described above with reference to FIGS. 1 to 10, and thus a redundant description thereof is omitted here.

The bus bar frames 127' and 128' are substantially the same as the bus bar frames 127 and 128 of FIG. 3, except that the flanges 127F and 128F of FIG. 3 and the rods 127R and 128R of FIG. 3 are omitted. The bus bar frames 127' and 128' may be coupled to the top plate 126 by, for example, the fasteners 129 such as bolts.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery cell assembly comprising:
a cell stack including a plurality of pouch type battery cells; and
a top plate assembly on the cell stack,
wherein the top plate assembly includes:
a top plate;
a bus bar frame coupled to the top plate; and
a plurality of bus bars on the bus bar frame,
wherein each of the bus bar frames includes a material different from a material of the top plate.

2. The battery cell assembly of claim 1, wherein the top plate includes a conductive material.

3. The battery cell assembly of claim 1, wherein the bus bar frame includes an insulating material.

4. The battery cell assembly of claim 1, wherein the bus bar frame is thermally fused to the top plate.

5. The battery cell assembly of claim **1,** wherein the top plate includes a plurality of fastening holes horizontally surrounding the plurality of bus bars.

6. The battery cell assembly of claim 5, wherein the bus bar frame includes a plurality of flanges overlapping the plurality of fastening holes.

7. The battery cell assembly of claim 6, wherein the bus bar frame includes a plurality of rods passing through the plurality of fastening holes and connected to the plurality of flanges.

8. The battery cell assembly of claim 6, wherein a width of each of the plurality of flanges is greater than a width of each of the plurality of fastening holes.

9. The battery cell assembly of claim **1,** further comprising a lower frame welded to the top plate,
wherein the lower frame includes a bottom part spaced apart from the top plate with the cell stack interposed between the bottom part and the top plate, and side walls welded to the top plate.

10. The battery cell assembly of claim 9, further comprising end plates welded to the top plate and having a flat plate shape.

11. The battery cell assembly of claim 1, wherein the plurality of bus bars include a part between the top plate and positive electrode leads and negative electrode leads of the plurality of pouch type battery cells.

12. A battery cell assembly comprising:
a lower frame having a U-shape;
a cell stack placed on the lower frame and including a plurality of first pouch type battery cells and a plurality of second pouch type battery cells, wherein each of the plurality of first pouch type battery cells includes a first lower side facing the lower frame and a first upper side opposite to the first lower side, wherein a first positive electrode lead and a first negative electrode lead of each of the plurality of first pouch type battery cells are on the first upper side and spaced apart from each other in a first direction, and each of the plurality of second pouch type battery cells includes a second lower side facing the lower frame and a second upper side opposite to the second lower side, wherein a second positive electrode lead and a second negative electrode lead of each of the plurality of second pouch type battery cells are on the second upper side and spaced apart from each other in the first direction; and
a top plate assembly on the cell stack,
wherein the top plate assembly includes:
a top plate;
a first bus bar frame coupled to the top plate by thermal fusion and including a plurality of first slits; and
a second bus bar frame coupled to the top plate by thermal fusion, spaced apart from the first bus bar frame in the first direction, and including a plurality of second slits,
the first positive electrode lead of each of the plurality of first pouch type battery cells and the second negative electrode lead of each of the plurality of second pouch type battery cells pass through a corresponding one of the plurality of first slits, and
the first negative electrode lead of each of the plurality of first pouch type battery cells and the second positive electrode lead of each of the plurality of second pouch type battery cells pass through a corresponding one of the plurality of second slits.

13. The battery cell assembly of claim 12, wherein the top plate is welded to the lower frame.

14. The battery cell assembly of claim 12, wherein first and second sides of the top plate are welded to the lower frame, the first and second sides being parallel to the first direction.

15. The battery cell assembly of claim 12, wherein the top plate includes a metal, and
the first and second bus bar frames include plastic.
